(19) Europäisches Patentamt

European Patent Office

Office européen des brevets

(11) **EP 1 956 782 A1**

(12) **EUROPEAN PATENT APPLICATION**

(43) Date of publication:
**13.08.2008 Bulletin 2008/33**

(51) Int Cl.:
**H04L 25/03** *(2006.01)*

(21) Application number: **07405040.2**

(22) Date of filing: **08.02.2007**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK RS**<br><br>(71) Applicant: **ABB RESEARCH LTD.**<br>**8050 Zürich (CH)** | (72) Inventor: **von Hoff, Thomas**<br>**8049 Zürich (CH)**<br><br>(74) Representative: **ABB Patent Attorneys**<br>**c/o ABB Schweiz AG,**<br>**Intellectual Property (CH-LC/IP),**<br>**Brown Boveri Strasse 6**<br>**5400 Baden (CH)** |

(54) **Method and apparatus for adaptive blind equalization**

(57) For blind equalization of a modulated signal received from a transmitter (12), equalizer coefficients (w) are determined and updated adaptively in an equalizer (1) based on an instantaneous gradient of a cost function derived from equalizer output, decimated to symbol rate, ($\hat{u}(k)$). The gradient is a natural gradient that takes into account the structure of the equalizer coefficients (w). The cost function employs a constant-modulus algorithm, enforcing the equalizer output, decimated to symbol rate, ($\hat{u}(k)$) to have a defined average energy, or an information theoretic approach, enforcing the equalizer output, decimated to symbol rate, ($\hat{u}(k)$) to have a probability distribution equal to the probability distribution of the modulated signal (s) transmitted by the transmitter (12). For PSK, APSK, DPSK, DAPSK and also for QAM modulated signals, applying the natural gradient to the cost function makes possible an adaptive blind equalization with an efficient convergence.

**Fig. 2**

**Description**

FIELD OF THE INVENTION

The present invention relates to a method of adaptive blind equalization. Specifically, the invention relates to a method of adapting in a device, such as a receiver, a modem or a demodulator, an equalizer for blind equalization, and to a device for demodulating a modulated signal, particularly a Phase Shift Keying (PSK) modulated signal, an Amplitude Phase Shift Keying (APSK) modulated signal, a Differential Phase Shift Keying (DPSK) modulated signal and/or a Differential Amplitude Phase Shift Keying (DAPSK) modulated signal.

BACKGROUND OF THE INVENTION

In data communication, digital information is transmitted over a communication medium. The communication channel consists of a digital signal processing device, a digital-to-analog converter, a modulator, an amplifier and a coupling device on the transmitter side, the communication medium and a coupling device, a demodulator, an analog-to-digital converter and a digital signal processing device on the receiver side. The channel shows some distortion which is time-variant due to the varying condition of the communication medium (length, topology, environmental effects).
Channel distortion limits the transmission capacity and needs to be equalized. The higher the bandwidth efficiency of the chosen modulation format is, the less channel distortion is accepted for achieving a desired bit error rate. In the case where the channel is time-varying, the equalizer must adaptively track the changing conditions as fast as possible.
Adaptive channel equalization has been studied since the 1960s. Typical approaches are:

- Training-symbol based adaptive equalization: The transmitter sends in a regular time interval a defined signal sequence, which is known to the receiver. The receiver compares the received signal with this defined sequence to update the channel equalizer. Since part of the time is used to send auxiliary information (the defined signal sequence), the bandwidth efficiency is reduced and the transmission delay increased.
- Blind equalization: unlike in the training-symbol based approach, no predefined information is transmitted. The adaptive algorithm to update the equalizer relies only on the information in the received signal. There are various approaches for blind equalization:

  - Decision-feedback equalization (DFE): it minimizes the mean-squared error between the equalizer output and the output of the decision device, which detects and recovers the symbols. Its effectiveness is based on a good performance of the decision device. The closer the initial settings to the optimal equalizer are, the better the performance. If the initial settings are far from the optimum values, the adaptive equalizer might end up in a spurious solution (since the detection device delivers wrong outputs). Therefore, DFE must be combined with another method providing good initial settings for the DFE.
  - Constant-modulus algorithm (CMA): as described in J.R. Treichler, B.G. Agee, "A new approach to the multipath correction of constant modulus signals", IEEE Transactions on Acoustics, Speech, and Signal Processing, vol. ASSP-31, no. 2, 1983, pp. 459-472, the update algorithm for the adaptive equalizer forces the equalizer output to have a defined average energy. The approach is insensitive to the phase, i.e. does not make use of any information that the received signal carries in the phase. The algorithm is effective for APSK and PSK signal constellation, but rather slow in the adaptation process.
  - Information-theoretical methods (IT): the information theoretic approach can be formulated as recovering the probability distribution of the transmitted signal, i.e. the equalizer is forced to process the received signal such that its probability distribution equals the one of the transmitted signal, which is defined by selection of the modulation scheme. The distance between two probability distributions can be measured by the Kullback-Leibner divergency.

Conventionally, the update algorithms are based on a gradient of a cost/objective function.

DESCRIPTION OF THE INVENTION

It is therefore an objective of the present invention to provide a method and a device for adaptive blind equalization of modulated signals, particularly PSK, APSK, DPSK, and/or DAPSK modulated signals. It is particularly an objective of the present invention to provide a method of adapting an equalizer for adaptive blind equalization of modulated signals that yields an efficient, i.e. rapid, convergence.
This objective is achieved by a method of adapting an equalizer for adaptive blind equalization according to claim 1, and a device for demodulating a modulated signal according to claim 7. Further preferred embodiments are evident from the dependent claims.

According to the present invention, the above-mentioned objects are particularly achieved in that, for adapting an equalizer for blind equalization of a modulated signal received in a device, e.g. a receiver, a modem or a demodulator, from a transmitter, determined in the device are equalizer coefficients based on an instantaneous gradient of a cost function derived from the equalizer output. The cost function employs a constant-modulus algorithm which enforces the equalizer output to have a defined average energy, i.e. a constant average output. The gradient is a natural gradient which takes into account the structure of the equalizer coefficients. The equalizer is updated adaptively with the determined equalizer coefficients. It has been shown in S. Amari, "Natural gradient works efficiently in learning", Neural Computation, 10:251-276, 1998, that forming the natural gradient yields efficient convergence for the de-convolution problem. An implementation of the natural gradient-based algorithm is introduced in S. Amari, S.C: Douglas, A. Cichocki, and H. H: Yang, "Multichannel blind de-convolution and equalization using natural gradient", IEEE Int. Workshop on Wireless Communication, pages 101-104, 1997. Thus, for PSK, APSK, DPSK, DAPSK and also for QAM modulated signals, applying the natural gradient to the constant-modulus algorithm for determining the equalizer coefficients makes possible an adaptive blind equalization with an efficient convergence.

In an alternative embodiment, the modulated signal is a PSK, an APSK, a DPSK or a DAPSK modulated signal, and the cost function employs an information theoretic approach, rather than the constant-modulus algorithm. Hence, the cost function enforces the equalizer output to have a probability distribution equal to a probability distribution of the modulated signal transmitted by the transmitter. Thus, for PSK, APSK, DPSK and DAPSK modulated signals, applying the natural gradient to the information theoretic approach for determining the equalizer coefficients makes possible an adaptive blind equalization with an efficient convergence.

Typically the equalizer is configured to sample the input signal at $1/T_{sym}$, $T_{sym}$ being the period of the symbols in the modulated signal. Preferably, however, the equalizer is configured as a so called fractionally-spaced equalizer using a sampling rate higher than $1/T_{sym}$, e.g. a multiple of $1/T_{sym}$. Advantages of fractionally-spaced equalizers are described in G.Ungerboeck "Fractional tap-spacing equalizer and consequences for clock recovery in data modems", IEEE Transactions on Communications, Vol. COM-24, No.8, August 1976, pp.856-864. Using a fractionally-spaced equalizer extends the possibilities of application of the proposed method from PLC receivers/modems/demodulators to radio transmission, particularly to mobile radio receivers/modems/demodulators.

In an embodiment, updates to the equalizer coefficients are scaled by a step size function for protecting from noise outliers. The step size function is dependent on the equalizer output. For fractionally-spaced equalizers, the step size function is dependent on a down-sampled equalizer output.

In a further embodiment, the step size function is based on an estimated equalization error which is determined based on the equalizer output and symbols detected by a de-mapper from the equalizer output. Thus in this embodiment, the step-size of the adaptive equalizer is controlled adaptively to optimize the tracking speed of the equalizer.

In addition to a method of adapting an equalizer for blind equalization of a modulated signal received from a transmitter, the present invention also relates to a device for demodulating a modulated signal received from a transmitter via a communication channel, e.g. a receiver, a modem or a demodulator for PLC or (mobile) radio communication.

In general, the proposed method and device are applicable in communication systems where a phase ambiguity of the equalized channel is acceptable. Specifically, the proposed CMA and information-theoretic approach for blind adaptive equalization is applicable in a power line carrier where circular differential phase modulation schemes (e.g. DPSK, ADPSK) are used. Though the proposed method equalizes the channel only up to a phase ambiguity, this has no negative impact when differential modulation schemes are applied.

BRIEF DESCRIPTION OF THE DRAWINGS

The present invention will be explained in more detail, by way of example, with reference to the drawings in which:

Fig. 1a shows the phase-dependent factor of a non-linear function in the information-theoretic approach,
Fig. 1b shows the amplitude-dependent factor of the non-linear function in the information-theoretic approach,
Fig. 2 shows a block diagram illustrating a transmitter and a receiver with a blind adaptive equalizer based on the information-theoretic approach,
Fig. 3 shows an impulse response of the channel (top), of the equalizer after adaptation (middle) and of channel and equalizer combined (bottom),
Fig. 4 shows a graph comparing the evolution of intersymbol interference for the constant modulus algorithm and the information-theoretic approach, both with the natural gradient technique,
Fig. 5a shows the signals before equalization,
Fig. 5b shows the signals after equalization using the information-theoretic approach,
Fig. 6 shows a graph comparing the evolution of intersymbol interference for the constant modulus algorithm using the standard or the natural gradient, and
Fig. 7 shows a graph comparing the evolution of intersymbol interference for the information-theoretic approach using the standard or the natural gradient.

DETAILED DESCRIPTION OF PREFERRED EMBODIMENTS

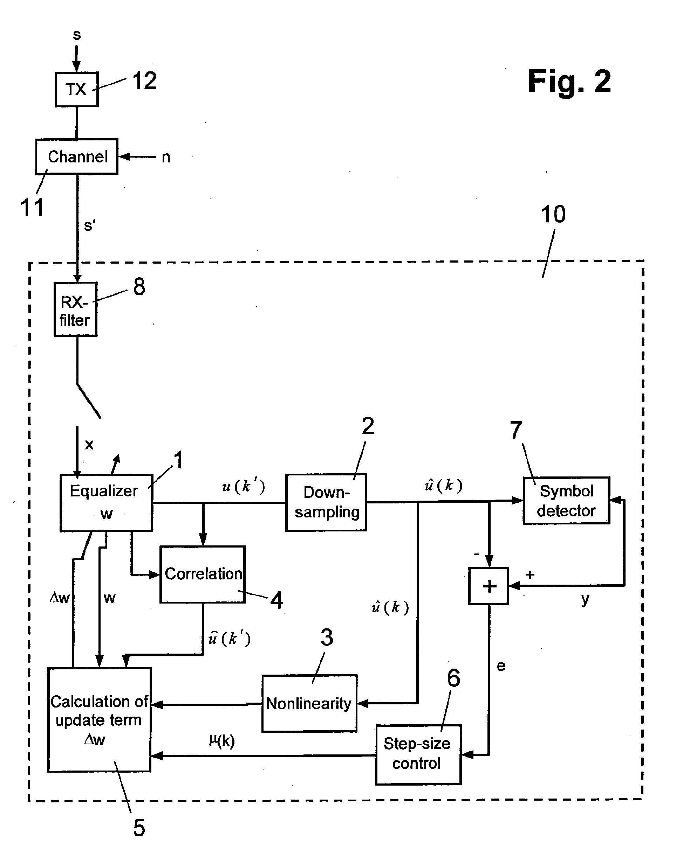

Fig. 2 shows a block diagram illustrating schematically a device 10, e.g. a receiver, a modem or a demodulator, for demodulating a modulated signal s' received from a transmitter 12 via a communication channel 11, e.g. a PLC carrier or a wireless radio communication link. As is indicated in Fig. 2, communication channel 11 is affected by noise n. Device 10 comprises a receiving filter 8, an equalizer 1 with equalizer coefficients w, a down-sampling module 2, a nonlinearity module 3, a correlation module 4, a calculation module 5, a step-size control module 6, and a symbol detector 7 (de-mapper). Depending on the embodiment, equalizer 1 is a symbol-spaced equalizer (SSE) or a fractionally symbol-spaced equalizer (FSE). They differ in the sampling rate of the equalized signal. While in SSE, the received signal is sampled with the symbol rate as sampling frequency $1/T_S$, the FSE input signal has a multiple sampling rate $N_D/T_S$. In the latter case, the equalizer output signal $u(k')$ is decimated to symbol rate or down-sampled in the down-sampling module 2 by a factor of $N_D$ yielding the signal $\hat{u}(k)$. The update equation for equalizer 1 can be stated as follows:

S1) In equalizer 1, calculation of $N_D$ equalizer output values by filtering x with w (sampling time: $T_S/N_D$):

$$u(k') = \sum_{i=0}^{N} x(k'-i)w_i(k) \quad \text{for } (k-1)N_D < k' \le kN_D$$

where $w_i(k)$, $i=0,...,N$ are the equalizer coefficients at time $k$. Signals are complex-valued and sampling is at symbol rate. In the initialization phase, the equalizer coefficients w must be set.

S2) In down-sampling module 2, decimating to symbol rate or down-sampling by a factor $N_D$ yields the symbol-spaced output signal (sampling time: $T_S$):

$$\hat{u}(k) = u(N_D k).$$

Adaptive equalization is performed by maximizing or minimizing an objective or a cost function $J(w_0, ..., w_N)$, respectively, $w_0, ..., w_N$ being the coefficients of equalizer 1. In the real-time environment, the adaptive algorithm works on-line and updates for the equalizer coefficients $w_0, ..., w_N$ are built from the instantaneous gradient of J. The update formula for the standard gradient is:

$$[w_0(k+1),...,w_N(k+1)] = [w_0(k),...,w_N(k)] + \mu(k)\nabla_w J(w_0(k),...,w_N(k))$$

Where $\nabla$ represents the gradient operator. The standard gradient does not take care of the parameter structure. In contrast, the natural gradient technique introduced by Amari, takes the parameter structure into account. The effect of the natural gradient is similar to an orthogonalization of the parameter space.

Two cost functions for adaptive blind equalization are considered; the information-theoretic approach and the Constant Modulus algorithm.

Information-Theoretic Approach

As mentioned above, the information-theorgtic approach for blind equalization seeks to recover the probability distribution function (pdf) of the source signal (the pdf is described by the PSK and APSK constellation, for example). At the same time, the statistical independence within the time series of the received symbols (equalizer output) is maximized. To achieve these goals, cost functions are introduced. Deriving the gradient of these cost functions yield update terms for adaptive equalization. For example, the cost function describing the closeness of the pdf of the source signal with the pdf of the equalizer output, is the well-known *Kullback-Leibner divergence* (KL):

$$\mathrm{KL}\big(p_S(u)\|p_u(u)\big) := \int p_s(u)\log\frac{p_s(u)}{p_u(u)}\,du$$

Where $0\log\dfrac{0}{0} := 0$. $p_s$ represents the pdf of the source signal (e.g. the APSK or PSK constellation) and $p_u$ the pdf of the equalizer output.

The Kullback-Leibner divergence is always either nonnegative, or 0, if $p_s \equiv p_u$. For discrete distribution $p_s$, the KL must only be evaluated for the finite support of $p_s$. The KL is minimized when only noise n is superposed and channel distortion is equalized. Thus, the KL is used as cost function to derive a gradient for adaptive blind equalization.

The gradient is first derived for a cyclic convolution in the channel and then approximated for the linear convolution. Applying the natural gradient, which has a similar effect as the orthogonalization of the parameter space, yields the update rule:

$$\underline{w}(k+1) = \underline{w}(k) + \mu\Big(\underline{\delta}^{(0)} - f(\hat{u}(k))\overline{\underline{u}}^{(k)}\Big) * \underline{w}(k)$$

where $\underline{w}(k)$ represents the equalizer filter taps, $\mu$ the step size, $\underline{\delta}^{(0)}$ a Kronecker-Delta sequence with

$$\delta^{(0)}(i) = \begin{cases} 1, & i = 0, \\ 0, & i \neq 0, \end{cases}$$

$\hat{u}(k)$ the equalizer output signal decimated by the factor $N_D$, $\hat{u}(k)=u(N_D k)$, $\overline{\underline{u}}^{(k)}$ the complex-conjugate time-reversed equalizer output series with $\overline{u}^{(k)}(i) = conj(u(kN_D - i))$, and $*$ the convolution of $\underline{w}(k)$, and the time series in the brackets $f(.)$ is the so-called score function which is defined as $f(\cdot) = p'_s(\cdot)/p_s(\cdot)$. $f$ is applied to $\hat{u}(k)$. $\overline{\underline{u}}^{(k)}$ is then multiplied with $f(\hat{u}(k))$. Since perfect equalization requires infinite length of the equalizer filter, which is generally non-causal, real implementations are approximations. For this, the equalizer filter is initialized by a $\underline{w}(0)$ which is 0 apart from the $D^{th}$ tap which is 1. By this, a delay of D is introduced to approximate the non-causal ideal equalizer by a causal filter.

Thus, with the information theoretic approach, subsequent to S 1 and S2, the next steps are:

NT3) Calculation in the nonlinearity module 3 of a nonlinear function $f$ of the down-sampled equalizer output. Ideally, this nonlinear function is the score function (see above). In the case of discrete and complex-valued signals, $f(u)$ must be approximated. For APSK and PSK signals, preferably, $f(u)$ is approximated as a product of a phase-dependent and an amplitude-dependent factor:

$$f(\hat{u}) = e^{i\varphi(\hat{u})} \cdot \psi(\hat{u}),$$

where the phase-dependent factor is (M symbols on a circle)

$$\varphi(\hat{u}) = \big\lfloor \arg(\hat{u})/(2\pi/M) \big\rfloor \frac{2\pi}{M} + \frac{\pi}{M}$$

and the amplitude-dependent factor becomes:

$$\psi(\hat{u}) = A\big(1 + \mathrm{sgn}\big(|\hat{u}| - A\big)\big)$$

for PSK, where A is the amplitude of the symbols and

$$\psi(\hat{u}) = \begin{cases} 0 & if & |\hat{u}| < A_{min} \\ A_{min} & if & |\hat{u}| = A_{min} \\ \dfrac{A_{max} + A_{min}}{2} & if & A_{min} < |\hat{u}| < A_{max} \\ A_{max} & if & |\hat{u}| = A_{max} \\ \dfrac{3A_{max} - A_{min}}{2} & if & A_{max} < |\hat{u}| \end{cases}$$

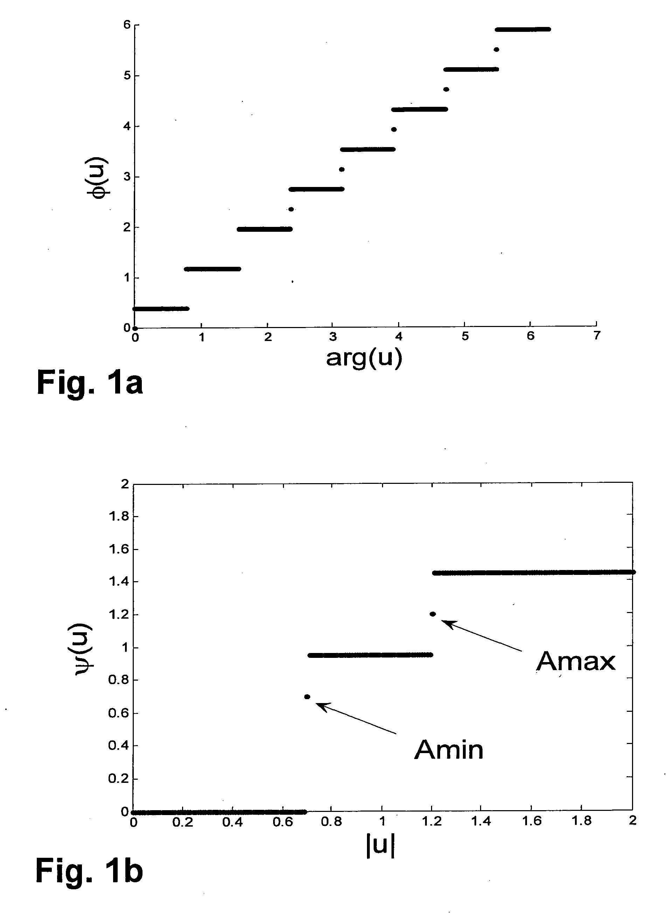

for APSK, where $A_{min}$ and $A_{max}$ describe the amplitudes of the inner and the outer circle of the APSK constellation (here an APSK constellation with 2 radii $A_{min}$ and $A_{max}$ is assumed, but this can be extended to more radii). The phase-dependent factor and the amplitude-dependent factor of the non-linear function are shown in Fig. 1a or Fig. 1b, respectively.

IT4) Correlating in correlation module 4 the complex-conjugate equalizer output signal $u$ with the equalizer filter coefficients w:

$$\hat{u}(k') = \sum_{i=0}^{N} w_i(k) conj(u(k' - N + i)) \quad \text{for} \ (k-1)N_D < k' \le kN_D$$

IT5) Determining in calculation module 5 the update term of the equalizer coefficients $w_i$:

$$w_i(k+1) = w_i(k) + \Delta w_i(k) = w_i(k) + \mu(k)\big(w_i(k) - f(\hat{u}(k - N/N_D)) \cdot \hat{u}(kN_D - i)\big),$$

Where $\mu(k)$ describes the step size. Derivation of this update algorithm is given in S. Amari, S.C: Douglas, A. Cichocki, and H. H: Yang, "Multichannel blind de-convolution and equalization using natural gradient", IEEE Int. Workshop on Wireless Communication, pages 101-104, 1997.

IT6) To protect the algorithm from the effect of outliers in the additive noise, included is the step-size control module 6 with a correction mechanism such as:

$$\mu(k) = \frac{\mu_0(k)}{N(1 + |f(\hat{u}(k)) \cdot \hat{u}(k)|)},$$

where $\mu_0$ can be selected as a constant.

Furthermore, the step size calculation can be enhanced by taking the current progress of the adaptation into account by defining $\mu_0$ as a function $h$ of the magnitude of the equalization error e: the smaller the equalization error is, the smaller has the step size to be chosen to reduce the equalization error further.

$$\mu_0(k) = h(|e(k)|) = h(|y(k) - \hat{u}(k)|),$$

$y(k)$ being the detected symbol provided by symbol detector 7.

Constant Modulus (CMA)

The second cost function considered is based on the Constant Modulus (CMA) which forces the average of the equalizer output to become constant. The general cost function, as outlined in D.N. Godard, "Self-recovering equalization and carrier tracking in two-dimensional data communication systems," IEEE Transactions on Communications, 28:1867-1875, Nov. 1980, is therefore

$$J_{CMA}(\underline{w}) = \frac{1}{2q}E\left\{\left(|\hat{u}|^q - R_q\right)^2\right\}$$

Where

$$R_q = \frac{E\left\{|s|^{2q}\right\}}{E\left\{|s|^q\right\}}$$

and $q=1,2,3,...,$ CMA referring to $q=2$, as outlined in J.R. Treichler, B.G. Agee, "A new approach to the multi-path correction of constant modulus signals," IEEE Transactions on Acoustics, Speech, and Signal Processing, vol. ASSP-31, no. 2, 1983, pp. 459-472.

Deriving the cost function for CMA with respect to the filter coefficients yields the update formula for the equalizer coefficients $w_i$:

$$\underline{w}(k+1) = \underline{w}(k) - \mu u(kN_D)\left(|u(kN_D)|^2 - R_2\right)\overline{\underline{x}}^{(k)}$$

$\overline{\underline{x}}^{(k)}$ being the complex-conjugate time-reversed equalizer output series, with $\overline{x}^{(k)}(i) = conj(x(kN_D - i))$.

Applying the natural gradient yields

$$\underline{w}(k+1) = \underline{w}(k) - \mu u(kN_D)\left(|u(kN_D)|^2 - R_2\right)\overline{\underline{u}}^{(k)} * \underline{w}(k)$$

The update of the equalizer is done with a frequency of the symbol rate.

Thus, with the CM algorithm, subsequent to S 1 and S2, the next steps are:

CMA3) Calculation in the nonlinearity module 3 of the nonlinear term

$$g(\hat{u}) = \hat{u}|\hat{u}|^{q-2} \cdot \left(|\hat{u}|^q - R_q\right),$$

respectively

$$g(\hat{u}) = \hat{u} \cdot \left(|\hat{u}|^2 - R_2\right) \text{ for } q=2.$$

CMA4) Correlating in correlation module 4 the complex-conjugate equalizer output signal with the equalizer filter coefficients $w_i$:

$$\hat{u}(k') = \sum_{i=0}^{N} w_i(k) conj\left(u(k' - N + i)\right) \text{ for } (k-1)N_D < k' \le kN_D$$

CMA5) Determining in calculation module 5 the update term of the equalizer coefficients:

$$w_i(k+1) = w_i(k) + \Delta w_i(k) = w_i(k) - \mu(k)g(\hat{u}(k - N)) \cdot \hat{u}(kN_D - i),$$

where $y(k)$ describes the step size as in step IT6).

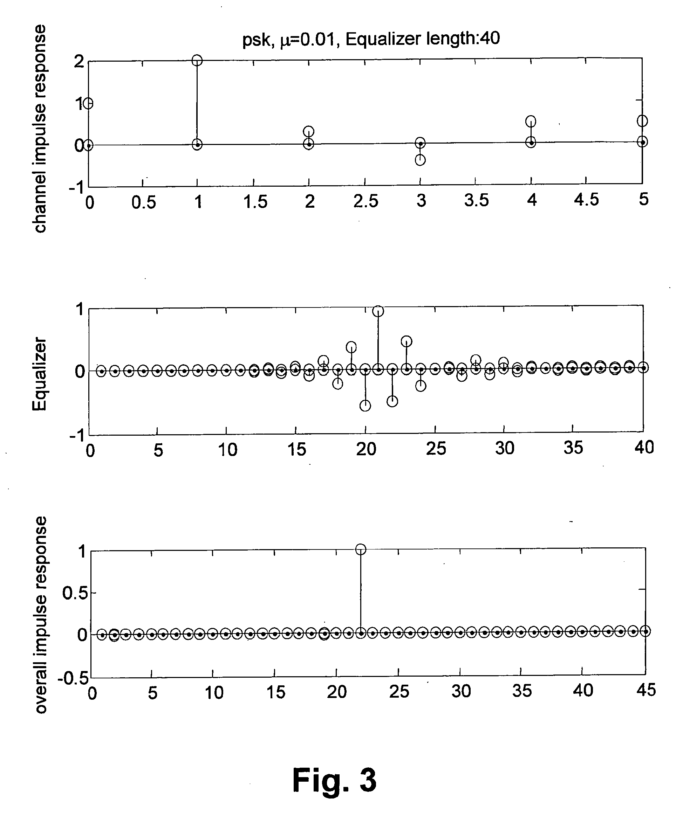

Based on simulations, Fig. 3 illustrates the effectiveness of the information-theoretic approach for the adaptation of the equalizer 1. For the simulation, a non-minimum-phase channel impulse response was selected. In Fig. 3 illustrated are, at the top, the impulse response of the channel 11, the sampling time being equal to the symbol time; in the middle, the equalizer 1 after adaptation; and at the bottom, the channel 11 and equalizer 1 combined.

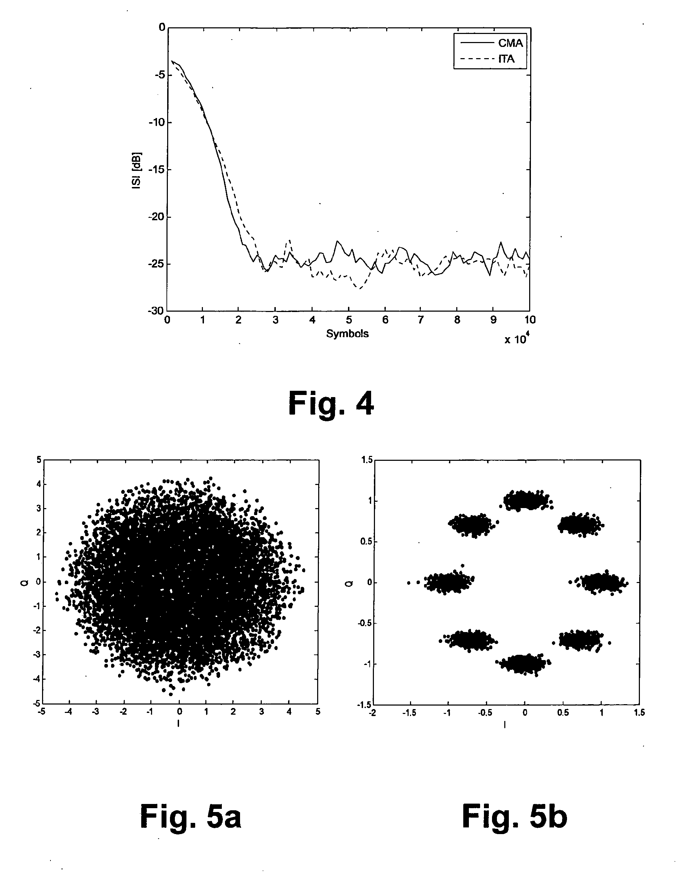

Figs. 5a and 5b show the sampled symbols before and after the equalization, respectively, when the information-theoretic approach with step-size 0.02 was applied.

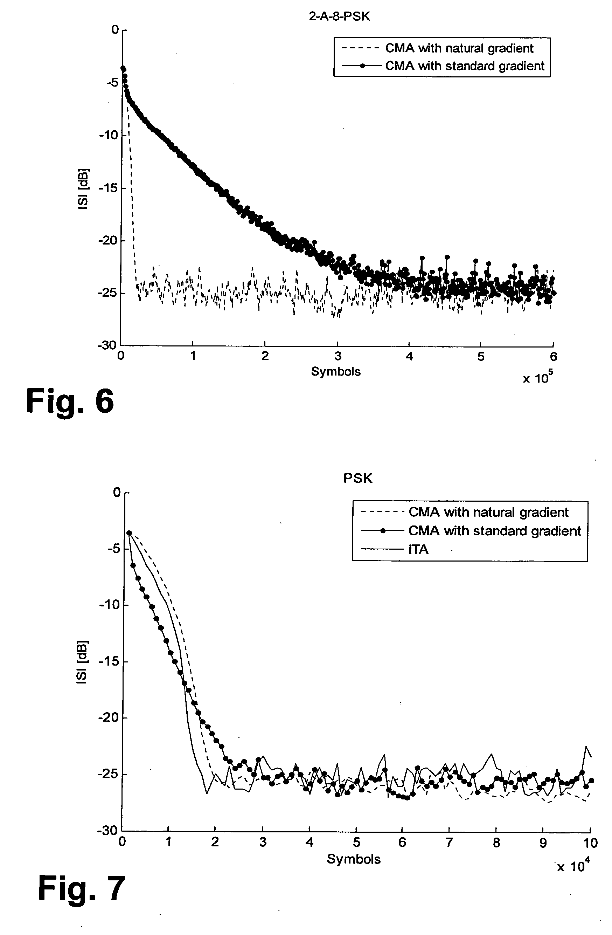

Figs. 4 and 6 show the evolution of the intersymbol interference of the overall impulse response, i.e. evaluated as the summed square of the difference between the ideal and the equalized impulse response for the different algorithm when APSK symbols were transmitted (in both cases with additive white Gaussian noise of 30dB). As can be seen in Fig. 6, the natural gradient approach for CMA, is much faster than the standard-gradient approach. Fig. 4 shows that the information-theoretic approach and CMA, both with the natural gradient, are comparable in adaptation speed. For each algorithm, the step-size was selected to achieve the same remaining intersymbol interference. The step-size was kept constant during the simulation. It is advantageous to use a time-varying step-size $\mu(k)$ that is dependent on an error measure in addition to the protection from outliers.

Fig. 7 shows the evolution of the intersymbol interference for the case of PSK symbols (PSK signal constellation). As can be seen in Fig. 7, the three algorithms (information-theoretic approach, CMA with natural and standard gradient) show a comparable performance (in all cases with additive white Gaussian noise of 30dB).

## Claims

1. A method of adapting in a device (10) an equalizer (1) for blind equalization of a modulated signal received from a transmitter (12), the method comprising:

   determining in the device (10) equalizer coefficients (w) based on an instantaneous gradient of a cost function derived from equalizer output (u(k')), the cost function employing a constant-modulus algorithm enforcing the equalizer output decimated to symbol rate ($\hat{u}(k)$) to have a defined average energy, and the gradient being a natural gradient taking into account a structure of the equalizer coefficients (w), and updating adaptively the equalizer coefficients (w).

2. The method according to claim 1, wherein the modulated signal is one of a Quadrature Amplitude Modulated signal, a Phase Shift Keying modulated signal, an Amplitude Phase Shift Keying modulated signal, a Differential Phase Shift Keying modulated signal, and a Differential Amplitude Phase Shift Keying modulated signal.

3. The method according to claim 1, wherein the modulated signal is one of a Phase Shift Keying modulated signal, an Amplitude Phase Shift Keying modulated signal, a Differential Phase Shift Keying modulated signal, and a Differential Amplitude Phase Shift Keying modulated signal, and wherein the cost function employs an information theoretic approach, rather than the constant-modulus algorithm, enforcing the equalizer output decimated to symbol rate ($\hat{u}(k)$) to have a probability distribution equal to a probability distribution of the modulated signal transmitted by the transmitter (12).

4. The method according to one of claims 1 to 3, wherein the equalizer (1) uses a sampling rate higher than $1/T_{sym}$, $T_{sym}$ being the period of symbols transmitted with the modulated signal.

5. The method according to one of claims 1 to 4, wherein updates to the equalizer coefficients (w) are scaled by a step size function for protecting from noise outliers, the step size function being dependent on the equalizer output, decimated to symbol rate, ($\hat{u}(k)$).

6. The method according to claim 5, wherein the step size function is based on an estimated equalization error (e), the estimated equalization error (e) being determined based on the equalizer output, decimated to symbol rate, ($\hat{u}(k)$) and symbols detected from the equalizer output.

7. A device (10) for demodulating a modulated signal received from a transmitter (12) via a communication channel (11), the device comprising:

   an equalizer (1) for blind equalization of the modulated signal,
   means for determining in the device equalizer coefficients (w) based on an instantaneous gradient of a cost function derived from equalizer output decimated to symbol rate ($\hat{u}(k)$), the cost function employing a constant-modulus algorithm enforcing the equalizer output decimated to symbol rate ($\hat{u}(k)$) to have a defined average energy, and the gradient being a natural gradient taking into account a structure of the equalizer coefficients (w), and

means for updating adaptively the equalizer coefficients (w).

8. The device (10) according to claim 7, wherein the modulated signal is one of a Quadrature Amplitude Modulated signal, a Phase Shift Keying modulated signal, an Amplitude Phase Shift Keying modulated signal, a Differential Phase Shift Keying modulated signal, and a Differential Amplitude Phase Shift Keying modulated signal.

9. The device (10) according to claim 7, wherein the modulated signal is one of a Phase Shift Keying modulated signal, an Amplitude Phase Shift Keying modulated signal, a Differential Phase Shift Keying modulated signal, and a Differential Amplitude Phase Shift Keying modulated signal, and wherein the means for determining the equalizer coefficients (w) are configured to use a cost function that employs an information theoretic approach, rather than the constant-modulus algorithm, enforcing the equalizer output decimated to symbol rate ($\hat{u}(k)$) to have a probability distribution equal to a probability distribution of the modulated signal transmitted by the transmitter.

10. The device (10) of claim 9, wherein the communication channel (11) is one of a power line communication carrier and a radio communication channel.

EP 1 956 782 A1

**Fig. 1a**

**Fig. 1b**

10

Fig. 2

psk, μ=0.01, Equalizer length:40

Fig. 3

**Fig. 4**

**Fig. 5a**

**Fig. 5b**

**Fig. 6**

**Fig. 7**

**European Patent Office**

## EUROPEAN SEARCH REPORT

Application Number

EP 07 40 5040

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHOUHONG ZHU ET AL: "Blind adaptive cdma receivers based on independent component separation with user-and-delay identification" 6TH INTERNATIONAL CONFERENCE ON SIGNAL PROCESSING, vol. 2, 26 August 2002 (2002-08-26), - 30 August 2002 (2002-08-30) pages 1275-1278, XP010627765 NJ, USA ISBN: 0-7803-7488-6 * abstract * Sections 1-4 ----- | 1-10 | INV. H04L25/03 |
| X | RICHARD K MARTIN ET AL: "Exploiting Sparsity in Adaptive Filters" IEEE TRANSACTIONS ON SIGNAL PROCESSING, vol. 50, no. 8, August 2002 (2002-08), pages 1883-1893, XP011080203 NY, US ISSN: 1053-587X * abstract * Sections I-II Section III.A. Sections IV-VII * tables I,and,II * ----- -/-- | 1-10 | |

|  |
|---|
| TECHNICAL FIELDS SEARCHED (IPC) |
| H04L |

The present search report has been drawn up for all claims

| Place of search | Date of completion of the search | Examiner |
|---|---|---|
| The Hague | 13 August 2007 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 07 40 5040

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/054634 A1 (MARTIN RICHARD K [US] ET AL) 9 May 2002 (2002-05-09)<br>* abstract *<br>* paragraphs [0002], [0008], [0009], [0011] *<br>* paragraphs [0012] - [0014] *<br>* paragraphs [0018], [0022] *<br>* paragraphs [0037], [0042] *<br>* paragraphs [0043], [0045], [0047], [0048], [0050], [0052] *<br>* paragraphs [0055] - [0058] *<br>* paragraphs [0064] - [0076] *<br>* paragraphs [0078] - [0087] *<br>* paragraphs [0089] - [0095] *<br>* paragraphs [0098] - [0104] *<br>* claims 1-10 *<br>* figures 3-5 *<br>----- | 1-10 | |
| A | SHUN-ICHI AMARI ET AL: "Adaptive Blind Signal Processing - Neural Network Approaches"<br>IEEE PROCEEDINGS,<br>vol. 86, no. 10, October 1998 (1998-10), pages 2026-2048, XP011044094<br>NEW YORK, US<br>ISSN: 0018-9219<br>* abstract *<br>Sections I-X<br>-----<br>-/-- | 1-10 | TECHNICAL FIELDS SEARCHED (IPC) |

The present search report has been drawn up for all claims

| Place of search | Date of completion of the search | Examiner |
|---|---|---|
| The Hague | 13 August 2007 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 07 40 5040

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DOUGLAS S C ET AL: "Kuicnet Algorithms for Blind Deconvolution" PROCEEDINGS OF THE 1998 IEEE SIGNAL PROCESSING SOCIETY WORKSHOP ON NEURAL NETWORKS FOR SIGNAL PROCESSING VIII, 31 August 1998 (1998-08-31), - 2 September 1998 (1998-09-02) pages 7-12, XP010298283 NY, USA ISBN: 0-7803-5060-X * abstract * * pages 7-9 * | 1 | |
| A | MORISON G ET AL: "Blind equalization using matrix momentum and Natural Gradient adaptation" IEEE 13TH WORKSHOP ON NEURAL NETWORKS FOR SIGNAL PROCESSING, 17 September 2003 (2003-09-17), - 19 September 2003 (2003-09-19) pages 439-448, XP010712479 NJ, USA ISBN: 0-7803-8177-7 * abstract * Sections 1-4 | 1-10 | |
| Y | RICHARD JOHNSONJR ET AL: "Blind Equalization Using the Constant Modulus Criterion: A Review" PROCEEDINGS OF THE IEEE, IEEE. NEW YORK, US, vol. 86, no. 10, October 1998 (1998-10), pages 1927-1950, XP011044100 ISSN: 0018-9219 * abstract * Sections I-III Appendix I-III -/-- | 1-10 | TECHNICAL FIELDS SEARCHED (IPC) |

The present search report has been drawn up for all claims

| Place of search | Date of completion of the search | Examiner |
|---|---|---|
| The Hague | 13 August 2007 | Dhibi, Youssef |

EPO FORM 1503 03.82 (P04C01)

**European Patent Office**

## EUROPEAN SEARCH REPORT

Application Number

EP 07 40 5040

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AMARI S ET AL: "Why natural gradient?" PROCEEDINGS OF THE 1998 IEEE INTERNATIONAL CONFERENCE ON ACOUSTICS, SPEECH AND SIGNAL PROCESSING, 12 May 1998 (1998-05-12), - 15 May 1998 (1998-05-15) pages 1213-1216, XP010279248 NY, USA ISBN: 0-7803-4428-6 * abstract * 1-5 ----- | 1-10 | |

TECHNICAL FIELDS SEARCHED (IPC)

The present search report has been drawn up for all claims

| Place of search | Date of completion of the search | Examiner |
|---|---|---|
| The Hague | 13 August 2007 | Dhibi, Youssef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 40 5040

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2007

| Patent document cited in search report | Publication date | Patent family member(s) | Publication date |
|---|---|---|---|
| US 2002054634 A1 | 09-05-2002 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J.R. TREICHLER ; B.G. AGEE.** A new approach to the multi-path correction of constant modulus signals. *IEEE Transactions on Acoustics, Speech, and Signal Processing,* 1983, vol. ASSP-31 (2), 459-472
- **S. AMARI.** Natural gradient works efficiently in learning. *Neural Computation,* 1998, vol. 10, 251-276
- **S. AMARI, S.C ; DOUGLAS, A. CICHOCKI ; H. H: YANG.** Multichannel blind de-convolution and equalization using natural gradient. *IEEE Int. Workshop on Wireless Communication,* 1997, 101-104

- **G.UNGERBOECK.** Fractional tap-spacing equalizer and consequences for clock recovery in data modems. *IEEE Transactions on Communications,* August 1976, vol. COM-24 (8), 856-864
- **D.N. GODARD.** Self-recovering equalization and carrier tracking in two-dimensional data communication systems. *IEEE Transactions on Communications,* November 1980, vol. 28, 1867-1875